# DEMANDE DE BREVET EUROPEEN

(11) **EP 3 578 521 A1**
(43) Date de publication de la demande: **11.12.2019**
(21) Numéro de dépôt: 18176828.4
(22) Date de dépôt: 08.06.2018
(51) Int. Cl.: C02F 3/08, C02F 3/12, C02F 1/00, C02F 3/00, C02F 103/34, C02F 1/44

(54) **PROCEDE DE TRAITEMENT DES EAUX USEES CONTENANT DES MICROPOLLUANTS D'ORIGINE PHARMACEUTIQUE**

(71) Demandeur: Cockerill Maintenance & Ingenierie S.A., 4100 Seraing (BE); Centre Belge d'Etude et de Documentation de l'Eau, en abrégé CEBEDEAU asbl, 4000 Liège (BE); Luxembourg Institute of Science and Technology (LIST), 4362 Esch-sur-Alzette (LU)
(72) Inventeur: NONET, Stéphane, 5170 Bois-de-Villers (BE); CAUCHIE, Henry-Michel, 4362 Esch-sur-Alzette (LU); MAGIS, Alain, 4682 Oupeye (BE)
(74) Mandataire: Pronovem

(57) **Abrégé**

Un procédé complètement biologique pour éliminer des micropolluants d'origine pharmaceutique dans des eaux usées et l'installation pour la mise en oeuvre du procédé, le procédé comprenant les étapes de :
- dans un premier traitement, introduire les eaux usées (1) dans le bioréacteur (11) à membranes et à lit mobile (MB-MBR) peuplé d'un premier consortium microbien pendant un premier temps de rétention ;
- dans un second traitement, introduire les eaux usées (1) traitées par le bioréacteur (11 ) dans la cuve de biofiltration (12), distincte de la cuve du bioréacteur, comprenant une ou plusieurs colonnes à charbon activé biologiquement (CAB) et adsorber les résidus de micropolluants d'origine pharmaceutique sur le charbon activé biologiquement;
- laisser coloniser le charbon activé biologiquement ayant adsorbé les résidus de micropolluants d'origine pharmaceutique par un second consortium microbien sous forme de biofilms pendant un second temps de rétention,
le temps de rétention hydraulique total, constitué de la somme du premier temps de rétention et du second temps de rétention, étant déterminé pour abaisser dans les eaux usées traitées (2) la concentration d'un ou plusieurs micropolluants d'origine pharmaceutique sous sa limite de détection et/ou pour obtenir un rendement global d'élimination des micropolluants d'origine pharmaceutique supérieur à 80%, de préférence supérieur à 95%, de leur teneur dans les eaux usées de départ (1 ).

## Description

### Objet de l'invention

La présente invention se rapporte à un procédé de traitement biologique des eaux usées contenant des micropolluants d'origine pharmaceutique même avec des propriétés physico-chimiques différentes, comme par exemple les eaux usées rejetées par un établissement hospitalier.

L'invention se rapporte également à une installation pour la mise en oeuvre du procédé.

### Arrière-plan technologique

Le rejet de produits pharmaceutiques dans les eaux usées est un problème environnemental récent. Actuellement, des effets négatifs imputables à ce rejet sont déjà observés sur les espèces animales. On peut dès lors supposer que l'être humain pourrait lui aussi être affecté dans un futur proche. Malgré cela, aucune norme de rejet n'a été instaurée à ce jour.

Les bioréacteurs membranaires (BRM ou MBR en anglais) et les procédés d'adsorption sur charbon actif (CA) sont deux technologies qui ont été largement étudiées dans le cadre du traitement des eaux usées. Néanmoins, leur implémentation est relativement nouvelle : il existe encore peu d'applications à taille réelle pour le traitement des eaux usées. La plupart des applications de traitement des eaux usées urbaines sont mises en oeuvre en utilisant une boue activée conventionnelle (BAC ou CAS en anglais) couplée à un décanteur.

Bien que la technologie membranaire (BRM ou MBR en anglais) soit une solution compacte qui permette de diminuer la variabilité sur l'élimination des macropolluants, voire de réduire la concentration des micropolluants des eaux traitées (par comparaison à une CAS couplée à un filtre à sable), elle reste plus énergivore et présente des coûts d'exploitation plus importants qu'une CAS. C'est la raison pour laquelle la technologie MBR n'a pas été la solution privilégiée par le passé. Ces dernières années, le développement de nouvelles membranes a cependant permis d'améliorer la fiabilité du système et de diminuer la consommation d'énergie, si bien que la technologie MBR est de plus en plus adoptée.

En ce qui concerne les procédés au charbon actif (CA), ils ne sont généralement pas appliqués dans le traitement des eaux usées. Cependant, il existe depuis peu quelques essais pilotes en Europe basés sur le couplage d'un MBR à un CA. Il s'agit d'installations de recherche et non d'unités à taille réelle.

Plus précisément, le charbon actif (CA) est un produit créé à partir de charbon bitumineux, de lignite, de tourbe, de bois ou d'autres matériaux ; il peut être aussi de synthèse. Il peut être utilisé dans de nombreuses applications impliquant généralement l'adsorption de molécules organiques (adsorption de colorants, purification de solution aqueuse utilisée en électrodéposition, purification de l'air, traitement médical, etc.). Après saturation de sa capacité d'adsorption, le charbon actif peut être régénéré via un procédé de séchage, désorption/décomposition et réactivation à la vapeur. Il s'agit d'un procédé coûteux impliquant le transport du charbon et une consommation énergétique importante.

La biofiltration est utilisée dans certaines unités de potabilisation de l'eau pour l'élimination des pesticides notamment, mais ce procédé n'est pas largement utilisé.

Ces dernières années, différentes études indiquent que le charbon actif granulaire, outre ses capacités d'adsorption, peut être utilisé comme support pour la croissance de populations bactériennes. Il semblerait que cette forme de charbon confère une certaine protection aux bactéries. De plus, la concentration en bactéries sur le charbon actif granulaire est souvent 100 à 1000 fois plus élevée que celle se retrouvant sur les filtres à sable pour les raisons suivantes :
- environnement adéquat ;
- bonne capacité d'adsorption (substrats, nutriments, oxygène) ;
- temps de contact élevé entre la biomasse et les composés organiques ;
- réduction de la biodisponibilité de certains composés toxiques ;
- présence de groupes fonctionnels favorisant la colonisation et la fixation des bactéries.

Toutefois, l'utilisation de colonnes à *charbon activé biologiquement* (CAB) reste une technologie mal maîtrisée. En effet, de nombreux points nécessitent d'être explorés tels que :
- optimiser l'élimination des substances organiques par les CABs ;
- améliorer l'élimination des micropolluants ;
- découvrir le(s) mécanisme(s) d'élimination des micropolluants ;
- minimiser le temps de colonisation du charbon ;
- étudier l'impact des rétro-lavages ;
- déterminer si l'inoculation des colonnes est efficace ;
- optimaliser les paramètres favorables au maintien de la biomasse.

Sur base des connaissances actuelles, l'activité dépolluante du charbon actif fait intervenir trois phases : une première période correspondant à une simple adsorption, une deuxième période correspondant à une adsorption et à une biodégradation et une troisième période correspondant à une biodégradation. Une meilleure maîtrise de la technologie CAB, permettant son développement commercial, constituerait donc une innovation scientifique et technique.

*Le bioréacteur à membrane* (MBR) quant à lui est une technologie permettant une dégradation biologique des polluants via l'emploi de boue activée. La membrane permet de maintenir une concentration élevée de matières en suspension (la fraction des bactéries sous forme de flocs) dans le réacteur tout en permettant l'obtention d'un effluent clarifié.

Une évolution récente de la technologie des réacteurs à membrane est le « Moving Bed Membrane Bioreactor (MB-MBR)» par introduction d'un lit mobile ou fluidisé. Ce type de réacteur hybride, qui combine la technologie de filtration membranaire et la présence d'une biomasse hybride, à la fois sous la forme de flocs en suspension et de biofilms attachés sur un support, est prometteur pour l'épuration des eaux chargées, mais pratiquement inexploré pour le traitement des produits pharmaceutiques (PPs) - cf. état de l'art.

Comparativement aux réacteurs membranaires à biofilms (MF-MBR), les hybrides MB-MBRs (ou IFAS-MBR) présentent, entre autres, l'avantage d'accepter de plus grandes charges de matières en suspension (voir §[0042]).

Une combinaison efficiente des technologies détaillées *supra* pourrait conduire à:
- une amélioration de l'élimination de la DCO (Demande Chimique en Oxygène), incluant les PPs ;
- une réduction du colmatage des CABs grâce à la présence du MBR ;
- une durée de vie nettement accrue des CABs ;
- la mise en place d'une barrière physique efficace limitant une dissémination de bactéries multi-résistantes aux antibiotiques qui se retrouvent potentiellement dans les effluents hospitaliers ;
- l'instauration de trois types de biomasse et donc une diversité microbienne accrue qui permet d'abattre un plus grand nombre de molécules :
   ∘ sous forme de flocs dans le MB-MBR
   ∘ sous forme de biofilms développés sur les supports du même compartiment ;
   ∘ sous forme de biofilms développés sur le CAB.

### Etat de la technique

Les procédés actuels permettant l'épuration des produits pharmaceutiques (PPs) dans les eaux usées comprennent l'adsorption sur particules en suspension, la volatilisation dans l'air, la photolyse et la transformation biologique.

Plus récemment, des traitements avancés ont également été développés : l'ozonation, les procédés d'oxydation avancée (AOP) tels que le traitement O3/H₂0₂, UV/H₂0₂ ou Fe²⁺/H₂0₂ permettant de former des radicaux hydroxyles, les procédés de filtration membranaire (nanofiltration et osmose inverse) et la filtration sur charbon actif (CA).

Si ces procédés ont été décrits et investigués à l'échelle du laboratoire pour le traitement des PPs, il n'en existe que peu d'applications industrielles spécifiques au traitement décentralisé (à savoir hors STEP urbaine) des eaux riches en PPs. On présente ci-après les avantages du bioréacteur à membrane à lit mobile (Moving Bed Membrane Bioreactor, MB-MBR), ainsi que des procédés à charbons actifs par rapport aux autres technologies présentes dans l'état de l'art. Les références citées sont reprises dans la bibliographie.

### Bioréacteur à membrane

Le bioréacteur à membrane (MBR) est une technologie qui combine séparation par membrane et dégradation biologique par boues activées. Elle est largement utilisée dans le traitement des eaux usées urbaines et industrielles. L'utilisation de ce type de réacteur pour le traitement des eaux usées chargées en PPs offre trois grands avantages conceptuels par rapport aux procédés à boues activées conventionnels (BAC ou CAS): une capacité à travailler avec un âge des boues élevé (>25 jours), une concentration supérieure en biomasse dans le réacteur ainsi qu'une rétention complète des particules solides. Ces avantages ont une répercussion directe sur l'épuration des PPs : la membrane retient les particules solides sur lesquelles les PPs sont adsorbés (Clara *et al.,* 2005), une partie des PPs s'adsorbe directement sur la membrane (Chang *et al.,* 2003), et l'âge des boues élevé facilite la transformation biologique des PPs au sein du réacteur.

L'âge des boues est un paramètre clef des processus de transformation biologique. Il est directement relié à la faculté d'adaptation biochimique de la boue activée. Ainsi, l'âge des boues élevé des MBR favorise la diversification des communautés microbiennes aux caractéristiques physiologiques diverses, l'adaptation de ces communautés à la dégradation des micropolluants présents dans le réacteur et le développement de bactéries à faible taux de croissance (Aubenneau *et al.,* 2011). Parmi ces bactéries à faible taux de croissance, les bactéries nitrifiantes semblent jouer un rôle important dans la dégradation des micropolluants. En effet, Roh *et al.* (2009) ont observé une biodégradation plus élevée pour certains micropolluants lorsque la biomasse est riche en bactéries nitrifiantes.

La concentration élevée en biomasse diminue le ratio substrat/microorganisme au sein du MBR, entraînant une minéralisation élevée du substrat. Cette concentration élevée de boue activée induit une augmentation des échanges d'information génétique au sein des MBR, amplifiant ainsi la biodiversité dans le réacteur (Ciçek *et al.,* 2001).

Les transferts de masse sont plus importants dans les MBR que pour les BAC. En effet, les flocs bactériens des MBR sont en moyenne plus petits que ceux des BAC et la surface spécifique de ces flocs par unité de volume de réacteur est plus grande, favorisant ainsi la dégradation biologique des polluants. Selon Radjenovic *et al.* (2007), ce phénomène de transfert de masse est à l'origine des meilleures performances d'épuration de PPs observées dans un MBR par rapport à un BAC. Ces auteurs ont également observé une meilleure uniformité des concentrations en diclofénac, kétoprofène, ranitidine, gemfibrozile, bezafibrate, paravastatine et ofloxacine à la sortie du MBR en comparaison au BAC.

En traitant les données existantes sur la comparaison BAC/MBR pour le traitement de micropolluants, Weiss et Reemtsma (2008) en ont conclu que le MBR a une capacité d'épuration supérieure au BAC pour les polluants au potentiel de biodégradabilité moyen. Pour les substances facilement biodégradables, ces auteurs positionnent MBR et BAC sur le même pied d'égalité. Bien que le MBR n'obtienne pas toujours de performances supérieures au BAC, De Wever *et al.* (2007) le préfèrent pour ses performances plus constantes, et sa meilleure gestion des effluents à concentrations fluctuantes.

Ces différents avantages font des réacteurs membranaires une technologie plus adaptée que les BACs pour le traitement des produits pharmaceutiques.

Notons finalement que, pour une application industrielle, un avantage important des MBRs est la compacité du système, engendrée par la forte concentration en biomasse du réacteur. Cette compacité est néanmoins influencée par l'âge des boues au sein du MBR. En effet, un âge des boues trop élevé peut entraîner une diminution de la proportion de biomasse active dans le MBR.

Pour pallier cet effet, et permettre au système de rester compact tout en étant performant, on peut découpler l'âge des boues au sein du réacteur en favorisant le développement de deux niches bactériennes au sein du MBR : l'une comprenant la biomasse en suspension, à faible âge des boues et l'autre comprenant une biomasse fixée sur supports, ayant un âge de boues élevé. L'intérêt de la présence de ce type de procédé à biofilm est décrit dans la section suivante.

### Procédé à biofilms

Les procédés à boues activées sont prédominants dans le secteur de l'épuration des eaux. Une manière d'intensifier ces procédés est d'utiliser la propension naturelle qu'ont les bactéries à former des biofilms, lorsqu'elles sont en présence de supports adaptés. Les systèmes à biofilms offrent plusieurs avantages opérationnels par rapport aux systèmes à boues activées : faible emprise spatiale, possibilité de fonctionnement à faible temps de rétention hydraulique, flexibilité opérationnelle, forte concentration de biomasse par unité de volume du réacteur et faible croissance microbienne, entraînant une faible production de boues (Andersson, 2009). On classe généralement ce type de systèmes selon le type de support utilisé : fixe ou fluidisé.

Bien que les réacteurs à biofilms aient été utilisés avec succès pour l'épuration des polluants traditionnels (pollution organique et nutriments, Chu et Wang, 2011 ; Ngo *et al.,* 2008), les exemples d'application de tels réacteurs pour l'épuration des micropolluants sont nettement plus rares.

Certaines études ont montré que les biofilms pouvaient engendrer de meilleurs rendements épuratoires que les procédés à biomasse en suspension, pour certains micropolluants (Rodriguez-Hernandez *et al,* 2014; Zupanc *et al,* 2013; Falas *et al,* 2012; 2013). Si ces études ne décrivent pas les mécanismes sous-jacents permettant d'expliquer ces différences, il est probable que l'augmentation de la diversité microbienne du réacteur en soit une cause importante. Cette richesse, favorisée par un découplage de l'âge des boues en suspension par rapport à celui de la biomasse fixée, permet d'obtenir une meilleure adaptation de la communauté bactérienne au substrat et de favoriser le développement de microorganismes à croissance lente au sein du réacteur.

Les observations faites par Falas *et al.* (2013) pour la dégradation de certains PPs entre un réacteur à biomasse fixée et en suspension sont résumées dans le Tableau 1

**Tableau 1 : Constantes de dégradation (K_{bio}) de certains micropolluants pour une biomasse en suspension et une biomasse fixée.**

| **Produits pharmaceutiques** | | ***K_{bio}* (l/g biomasse. jour) Biomasse** | |
|---|---|---|---|
| | | **En suspension** | **Fixée** |
| **Antibiotiques** | *N-acetylsulfamethoxazole* | 1,1-1,4 | 0,7-1,6 |
| | *Clarithromycine* | 0,18-0,29 | <0,2 |
| **Anti-inflammatoire** | *Diclofénac* | ≤0,1 | 1,3-1,7 |
| **Antiépileptique** | *Carbamazépine* | ≤0,1 | ≤0,1 |
| **Béta-bloquant** | *Aténolol* | 0,67-0,9 | 0,53-0,67 |
| **Agents hypolipémiants** | *Bezafibrate* | 2,3-2,9 | 5,2-6,0 |

Dans ce tableau, les constantes de dégradation englobent les mécanismes de sorption, désorption et biodégradation, et sont données sous la forme de la constante de dégradation *K_{bio}.* Selon le *K_{bio}* on peut identifier trois groupes de composés : non dégradés significativement (<20%) pour les composés au *K_{bio}* <0.1 l/(g biomasse . jour), composés dégradés à plus de 90% pour les composés au *K_{bio}* >10 l/(g biomasse . jour) et des composés plus ou moins dégradés pour les valeurs intermédiaires (Joss *et al.,* 2006). On a observé que le procédé à biofilm favorise la dégradation de la thriméthroprime, du kétoprofène, du diclofénac, du lévétiracétam, du valsartan et du benzofibrate par rapport au procédé à biomasse en suspension. Ces meilleurs rendements pourraient être expliqués par les différentes conditions d'oxydoréduction existant au sein des biofilms (oxique/anoxique). Un réglage délicat de l'épaisseur des biofilms agit sur le gradient redox en son sein, et donc sur les microorganismes qui s'y trouvent.

L'étude de Luo *et al.* (2014) traite de l'utilisation d'un réacteur à biofilm ayant un support bactérien en éponge, avec des taux d'abattement rapportés variant entre 25,9 et 96,8%, selon les micropolluants considérés. Dans cette étude, la biodégradation a été identifiée comme le mécanisme principal de dégradation des micropolluants. L'adsorption sur la boue joue également un rôle non négligeable, surtout pour la carbamazépine, le kétoprofen et le pentachlorophénol.

Les procédés à biofilm trouvent donc a priori pleinement leur justification dans le traitement des micropolluants.

### Movinq bed Membrane bioreactor (MB-MBR)

Le « Moving Bed Membrane Bioreactor (MB-MBR)» est une évolution récente de la technologie des réacteurs à membranes. Ce type de réacteur, qui combine les avantages des biofilms et celle de la filtration membranaire (voir ci-dessus), est prometteur pour l'épuration des eaux chargées en PPs *in situ* car il rassemble les avantages des deux technologies au sein d'un même procédé. Des recherches actuelles se focalisent principalement sur l'impact du lit mobile sur la réduction du colmatage des membranes.

Des applications industrielles des réacteurs de type MB-MBR n'ont, à la connaissance des inventeurs, pas encore été utilisées pour le traitement d'eaux usées concentrées en PPs bien que le potentiel de cette technologie pour l'élimination de composés pharmaceutiques soit important.

L'avantage du MB-MBR est d'être une technologie très compacte mais son désavantage est un coût d'investissement élevé.

### Couplage MBR - Charbon actif

Bien que le MBR soit considéré comme un procédé efficace pour le traitement de certains PPs, il ne permet malheureusement pas de dégrader/adsorber l'entièreté des micropolluants présents dans les eaux usées. L'efficacité limitée des MBR pour la dégradation de certains micropolluants nécessite le couplage du procédé aérobie avec un post-traitement, comme, par exemple, un charbon actif (CA).

Le couplage d'un réacteur de type MB-MBR avec un charbon activé biologiquement (CAB) comme unité de post-traitement au sein d'un même procédé de traitement d'eau n'a été que peu étudié dans la littérature et son application industrielle est, à la connaissance des inventeurs, inexistante. Pourtant, un tel couplage est théoriquement intéressant. L'effluent en sortie du MB-MBR est déjà partiellement épuré, et il contient beaucoup moins de composés organiques volumineux qui pourraient entrer en compétition avec les PPs pour les sites d'adsorption du charbon actif.

Seules les études de Nguyen *et al.* (2012, 2013) s'approchent d'un dispositif MB-MBR/CA. Elles traitent de l'utilisation conjointe d'un MBR et d'une unité de charbon actif granulaire en post-traitement pour la dégradation de PPs.

Ces études sont encourageantes, car elles montrent de bonnes performances d'épuration du MBR pour les contaminants hydrophobes, ainsi qu'une bonne capacité de dégradation des micropolluants hydrophiles et persistants (carbamazepine, diclofenac et fenoprop) sur le charbon actif granulaire, justifiant la complémentarité des deux unités. Cependant, elles mettent aussi en avant la dégradation de la capacité d'adsorption dans le temps du charbon actif pour certains PPs hydrophiles, ce qui questionne sur la méthode de régénération du charbon actif. Cette problématique pourrait être résolue en utilisant un charbon activé biologiquement, car la régénération du charbon actif y est stimulée par les bactéries.

N. Vieno *et al.* ont étudié l'élimination du diclofénac dans une usine de traitement des eaux usées municipales. Les bioréacteurs à membranes (MBR) et les bioréacteurs mixtes (MB-MBR) permettent une élimination supérieure du diclofénac par rapport aux boues activées conventionnelles.

E. Schneider *et al.* ont évalué la performance d'un réacteur MB-MBR pour le traitement d'eaux usées de raffinerie de pétrole et la possibilité de réutiliser les effluents de MB-MBR, après ozonation, en série avec une colonne de CAB.

T. de la Torre et *al.* ont étudié l'élimination de 17 composés pharmaceutiques et de 22 polluants de trace organique dans une installation pilote de traitement d'eaux usées urbaines. Les bioréacteurs à membranes à biomasse en suspension (MBR) ou mixte (MB-MRB), ainsi qu'un bioréacteur à membranes à biofilm intégré (IFAS-MBR) ont été comparés. Une osmose inverse a été également utilisée après le pilote pour améliorer les taux d'élimination. L'élimination des hormones a été de 100% dans le réacteur IFAS-MBR, ce qui a été attribué à la présence de biofilm. Après osmose inverse, on atteint des taux d'élimination de 88% en moyenne.

Le document EP 2 960 214 concerne un procédé d'élimination de produits pharmaceutiques présents dans des eaux usées, au moyen de l'utilisation de charbon actif en poudre (CAP) dans un réacteur biologique séquentiel couplé à une enceinte à membrane de filtration. Ce réacteur comprend une première unité de réaction qui fonctionne de manière séquentielle et dans laquelle on ajoute le CAP. L'effluent produit issu de la première unité passe vers une enceinte annexe qui dispose d'une membrane d'ultrafiltration dont la dimension des pores est située entre 0,04 et 0,4 µm, avec une aération continue, et dont le perméat constitue l'effluent du procédé. Le CAP est ajouté afin de maximiser l'élimination de contaminants pharmaceutiques, notamment ceux qui sont réfractaires aux traitements biologiques. Ce procédé permet non seulement de réduire la matière organique (>95%) et les nutriments (>75%), mais il permet également d'obtenir des rendements élevés (>90%) d'élimination des produits pharmaceutiques présents au niveau de traces (< 100 µg/L).

Dans les documents WO 2012/119266 et WO 2014/036732, on réduit la demande chimique en oxygène (DCO ou COD en anglais) réfractaire dans un système de traitement d'eau. La méthode comprend le prétraitement du liquide dans une unité de prétraitement afin de réduire la quantité de bactéries ou de microorganismes indigènes afin d'éviter qu'ils ne nuisent aux microorganismes sélectionnés et introduits de l'extérieur. Le liquide est ensuite introduit dans un réacteur qui comprend un lit filtrant constitué d'un matériau support. Des microorganismes spéciaux sont sélectionnés et utilisés pour coloniser le matériau support afin d'éliminer la DCO réfractaire. On cultive un biofilm sur la surface du matériau support afin d'immobiliser les microorganismes sélectionnés dans le réacteur. La méthode comprend de plus la percolation du liquide provenant de l'unité de prétraitement au travers du lit filtrant colonisé par les microbes sélectionnés afin de dégrader au moins partiellement la DCO réfractaire dans des conditions aérobies. Dans un mode de réalisation, le matériau support est formé de charbon actif en grains (CAG) et les microorganismes sélectionnés contiennent au moins une espèce microbienne sélectionnée dans les genres suivants : Bacillus, Comamonas, Arthrobacter, Micrococcus, Pseudomonas, Pediococcus, Achromobacter, Flavobacterium, Mycobacterium, Rhodanobacter, Stenotrophomonas ainsi que parmi les levures.

Le document WO 2017/067882 divulgue un dispositif conçu pour le traitement des eaux usées comprenant au moins une sorte de micropolluants. Ledit dispositif comprend une colonne et un système de lavage à contre-courant en communication fluidique avec ladite colonne. La colonne présente une zone qui comprend du charbon biologiquement activé qui est en aval de l'entrée de la colonne, ladite zone étant divisée en sous-zones A, B et C. La colonne comprend en outre un espace de lavage à contre-courant, qui se trouve en aval de ladite zone comprenant du charbon biologiquement activé. Ledit dispositif est remarquable en ce que le charbon biologiquement activé de la sous-zone A comprend des micro-organismes sous-alimentés, le charbon biologiquement activé de la sous-zone B comprend des micro-organismes alimentés par un premier système d'alimentation, et le charbon biologiquement activé de la sous-zone C comprend des micro-organismes alimentés par un second système d'alimentation.

L'étude de l'état de l'art montre qu'il existe certaines pistes inexplorées qui permettraient d'améliorer le traitement biologique des eaux chargées en PPs. Certaines de ces pistes sont par exemple que :
- normalement, l'efficacité de la dégradation est augmentée pour des âges de boues élevés (supérieur à 25 jours) ;
- la technologie MBR est plus efficace que le traitement conventionnel a boue activée (BAC) ;
- les procédés à biomasse fixée peuvent s'avérer plus efficaces que ceux à biomasse en suspension ;
- les bactéries à faible taux de croissance, dont les bactéries nitrifiantes, jouent un rôle clé dans la biodégradation des PPs.

Sur base de ces pistes, il est probable que la dégradation des PPs sera améliorée par :
a. l'augmentation de l'âge des boues dans le MBR ;
b. la présence d'un environnement ou les bactéries spécialisées pourront se développer (supports bactériens).

### Buts de l'invention

La présente invention vise à fournir une solution au problème de la présence de micropolluants d'origine pharmaceutique dans les eaux usées.

L'invention vise en particulier à maintenir les coûts opérationnels d'épuration sous contrôle, en particulier ceux liés à la consommation électrique des installations.

L'invention vise aussi des améliorations par rapport à l'art antérieur telles qu'un traitement 100% biologique, l'absence de colmatage lié à l'utilisation de membranes d'osmose inverse ou l'absence de consommation de charbon actif en grains (CAG ou GAC en anglais) ou la possibilité de sa réactivation.

L'invention vise encore à utiliser des supports bactériens qui n'endommagent pas les membranes des réacteurs.

L'invention a enfin pour but secondaire de créer une installation d'épuration qui soit compacte et qui présente un aspect visuel acceptable.

### Principaux éléments caractéristiques de l'invention

Un premier aspect de la présente invention se rapporte à un procédé complètement biologique pour éliminer des micropolluants d'origine pharmaceutique dans des eaux usées, le procédé comprenant les étapes de :
- fournir un bioréacteur à membranes et à lit mobile hybride (MB-MBR) pour développer une croissance de biomasse à la fois sur support fixe et en suspension sous forme de flocs, et sur des agents porteurs mobiles ;
- fournir une cuve de biofiltration, distincte de la cuve du bioréacteur, comprenant une ou plusieurs colonnes à charbon activé biologiquement (CAB) ;
- favoriser une alimentation stable avec des eaux usées comprenant des micropolluants d'origine pharmaceutique, par l'installation d'une cuve tampon en amont du bioréacteur ;
- prétraiter lesdites eaux usées comprenant des micropolluants d'origine pharmaceutique par passage dans un tamis à mailles fines, de manière à retenir les particules ayant un diamètre supérieur à 1 mm afin d'augmenter la durée de vie des membranes ;
- dans un premier traitement, introduire les eaux usées, une fois tamisées, dans le bioréacteur peuplé d'un premier consortium microbien se trouvant et/ou se développant sur les parties fixes et en suspension sous forme de flocs, et sur les supports mobiles, pendant un premier temps de rétention ;
- retenir les consortia bactériens dans ce premier bioréacteur grâce à un système de séparation solide / liquide efficace tel que les membranes d'ultrafiltration ;
- dans un second traitement, introduire les eaux usées traitées par le bioréacteur dans la cuve de biofiltration et adsorber les résidus de micropolluants d'origine pharmaceutique sur le charbon activé biologiquement ;
- laisser coloniser le charbon activé biologiquement ayant adsorbé les résidus de micropolluants d'origine pharmaceutique par un second consortium microbien sous forme de biofilm pendant un second temps de rétention,
- rejeter dans l'environnement les eaux usées traitées,
le temps de rétention hydraulique total, constitué de la somme du premier temps de rétention et du second temps de rétention, étant déterminé pour abaisser dans les eaux usées traitées (2) la teneur d'un ou plusieurs micropolluants d'origine pharmaceutique sous la limite de détection et/ou pour obtenir un rendement global d'élimination des micropolluants d'origine pharmaceutique supérieur à 80%, de préférence supérieur à 95%, de leur teneur dans les eaux usées de départ (1).

Selon des modalités préférées de l'invention, le procédé comprend au moins une des caractéristiques suivantes, ou une combinaison appropriée de celles-ci :
- la cuve du bioréacteur à membranes et à lit mobile hybride (MB-MBR) est séparé de la cuve de biofiltration par une membrane d'ultrafiltration ;
- les micropolluants d'origine pharmaceutique considérés dans le procédé sont au moins sélectionnés dans le groupe constitué de l'amisulpride, le candésartan, la carbamazépine, la clarithromycine, le cyclophosphamide, le diclofénac, l'érythromicine, le fénofibrate, l'ibuprofène, la lidocaïne, le métoprolol, le naproxène et le paracétamol ;
- on introduit dans le bioréacteur à membranes un premier consortium de microorganismes externes, pour coloniser des parties fixes et les supports mobiles avec lesdits microorganismes et mettre en culture un biofilm sur ces parties fixes et ces supports mobiles afin d'immobiliser lesdits microorganismes ;
- on introduit dans la cuve de biofiltration un second consortium de microorganismes externes, pour coloniser le charbon activé biologiquement ayant capté les résidus de micropolluants d'origine pharmaceutique adsorbés par le charbon activé biologiquement ;
- les microorganismes du second consortium sont différents de ceux du premier consortium ;
- le charbon activé biologiquement est mis en oeuvre sous forme de charbon actif en poudre, en grains ou en micrograins ;
- une étape supplémentaire de purification de l'air issu de la filière de traitement des eaux usées est mise en oeuvre, notamment en vue d'éliminer les odeurs ; au moyen d'ozone, de rayonnement ultraviolet ou de charbon actif.

Un deuxième aspect de l'invention se rapporte à une installation pour la mise en oeuvre du procédé décrit précédemment, caractérisée en ce qu'elle comprend :
- une cuve tampon pour une alimentation stable en eaux usées contenant des micropolluants d'origine pharmaceutique ;
- une unité de pompage ;
- une étape de prétraitement incluant au moins un tamis à mailles fines pour la rétention des particules ayant un diamètre supérieur à 1 mm ;
- un bioréacteur à membranes et à lit mobile hybride (MB-MBR) pour développer une croissance de biomasse à la fois sur support fixe et en suspension sous forme de flocs, et sur des supports mobiles ;
- au moins une cuve de biofiltration sur charbon activé biologiquement distincte de la cuve du bioréacteur, séparée de celui-ci par une membrane d'ultrafiltration et située en aval de celui-ci, comprenant une ou plusieurs colonnes à charbon activé biologiquement (BAC) ;
- des unités de stockage et dosage de produits chimiques ;
- un système de traitement de l'air et des odeurs.

Avantageusement, une cuve tampon est insérée entre le bioréacteur à membrane et la cuve de biofiltration, pour le contre-lavage des membranes du bioréacteur MB-MBR et du charbon activé biologiquement des colonnes de BAC.

### Brève description des figures

La Figure 1 représente schématiquement les séquences de traitement pour une installation de traitement présentant un couplage MB-MBR/CAB.
La Figure 2 donne des valeurs typiques pour un certain nombre de paramètres habituels en analyse des eaux usées (DCO, température, conductivité, pH, etc.) ainsi que les concentrations de différents types de macropolluants détergents, organiques extractibles par solvant, etc.) dans un exemple d'eaux usées rejetées par un établissement hospitalier.
La Figure 3 montre les rendements d'élimination des macropolluants pour les deux stratégies d'aération investiguées (dénitrification par SNDN à gauche, n=3 et ANDN, n=5 à droite).
La Figure 4 montre les rendements correspondants d'élimination dans le cas de micropolluants.
La Figure 5 montre le rendement épuratoire de la partie MB-MBR du procédé selon l'invention pour l'ensemble des molécules indicatrices quantifiables.
La Figure 6 montre le profil de la courbe de consommation cumulée en oxygène dissous (DO) sur les cinq colonnes de CA selon une forme d'exécution préférée de l'invention.
La Figure 7 montre l'intégration des données présentées à la Figure 6.
La Figure 8 montre les rendements épuratoires de 12 des 13 molécules indicatrices sur les cinq colonnes de CA selon une forme d'exécution préférée de l'invention.
La Figure 9 montre le rendement épuratoire global pour l'élimination des macropolluants dans le MB-MBR-CAB.
La Figure 10 donne les rendements épuratoires individuels du procédé global pour 12 des 13 molécules indicatrices.

### Description détaillée de l'invention

Dans le cadre du traitement des micropolluants, le développement de nouvelles configurations hybrides de MBR-CA spécialement conçues pour garantir une élimination accrue de produits pharmaceutiques (PPs) constitue un enjeu à la fois scientifique et environnemental. Le succès de cette technologie repose sur (1) une parfaite maîtrise des transferts biotiques (biosorption) ou abiotiques (volatisation, adsorption sur un support) des micropolluants au sein de l'unité de traitement, (2) le développement de consortiums microbiens épurateurs spécifiques, (3) une augmentation de la biodisponibilité des PPs et donc de leur biodégradation, (4) une diminution du colmatage des membranes et (5) une réduction de l'impact environnemental et des coûts énergétiques.

La démarche scientifique associée au projet peut être résumée comme suit :
- les effluents liquides hospitaliers ont un effet sur la vie aquatique ;
- mais l'installation d'une station d'épuration au sein du centre hospitalier est actuellement trop coûteuse ;
- les traitements biologiques conventionnels ne sont pas appropriés pour éliminer les produits pharmaceutiques, bien que le traitement biologique soit l'étape la plus efficace ;
- certains traitements avancés sont adéquats (UV, O₃, CA) ; néanmoins, les traitements avancés actuels sont gourmands en énergie ;
- l'UE a inscrit plusieurs produits pharmaceutiques dans une liste de substances prioritaires ; cette liste est amenée à s'étendre ;
- ce projet investigue essentiellement les limites du traitement biologique en scindant conceptuellement le procédé en deux étapes permettant le développement et l'optimalisation de différents consortia microbiens spécialisés (flocs, biofilm, CAB).

### Description de formes d'exécution préférées de l'invention

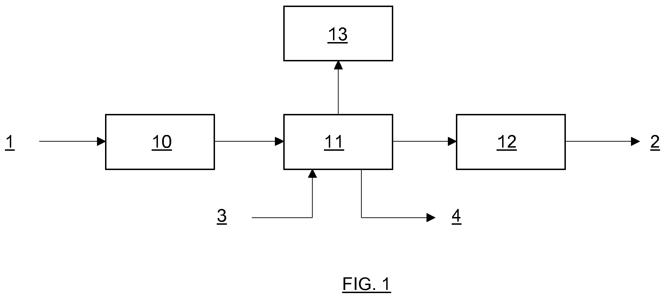

La ligne de traitement pour le couplage MB-MBR/CAB selon une forme d'exécution préférée de l'invention et représentée schématiquement à la Figure 1 comprend :
- une cuve tampon 10 dans laquelle arrivent les eaux usées 1 chargées de PPs ;
- une unité de pompage (non représentée) ;
- une étape de prétraitement incluant au moins un tamis à mailles fines (non représentée) ;
- un réacteur MB-MBR 11 (Moving Bed Membrane Bio Reactor) alimenté par les eaux usées venant de la cuve 10 et par de l'air 3 et avec en sortie le rejet de boues 4 et une unité de traitement de l'air 13 ;
- au moins une cuve de biofiltration 12 séparée du réacteur MB-MBR 11 ;
- plusieurs unités de stockage et dosage de produits chimiques (non représentées) ;
- un système de suppression des odeurs 13 ;
- une cuve de stockage des purges de la cuve 11 (non représentée)
- le rejet des eaux traitées 2 à l'environnement.

La cuve tampon 10 assure une alimentation stable du procédé de traitement biologique. Le tamisage fin permet l'élimination des particules de taille > 1 mm en vue notamment d'éviter la sédimentation dans les cuves biologiques (et donc un colmatage de conduites, pompes, etc.). Les deux cuves séparées de traitement biologique vont permettre le développement de consortia microbiens différents. La première cuve de traitement 11 (MB-MBR) va utiliser des procédés à croissance de biomasse à la fois en suspension et fixe en vue d'augmenter la concentration en biomasse et le rendement de l'élimination de DOC et N. Les colonnes de biofiltration 12 (ou à charbon activé biologiquement) sont destinées à l'élimination des produits pharmaceutiques restants après le passage dans la cuve MB-MBR 11 grâce aux bactéries du second consortium en biofilms. Les résidus de médicaments vont être adsorbés sur le charbon actif ; ensuite les colonies bactériennes vont se développer sur les sites proximaux. Selon l'invention, une auto-sélection des bactéries est possible. Enfin, une membrane d'ultrafiltration entre les deux cuves va maintenir les consortia bactériens séparés.

Un système d'élimination des odeurs sera avantageusement déterminé ou optimisé en considérant :
- les problèmes environnementaux et de santé publique ;
- les exigences dues à un degré élevé de compacité de l'installation.

### Etude, conception et validation d'un système de traitement biologique

Trois campagnes d'échantillonnage ont été menées sur des eaux usées rejetées par un hôpital, afin d'optimaliser, d'une part, le système de bioréacteur à membrane à culture mixte MB-MBR et, d'autre part, valider le mécanisme épuratoire des colonnes à charbon activé biologiquement CAB.

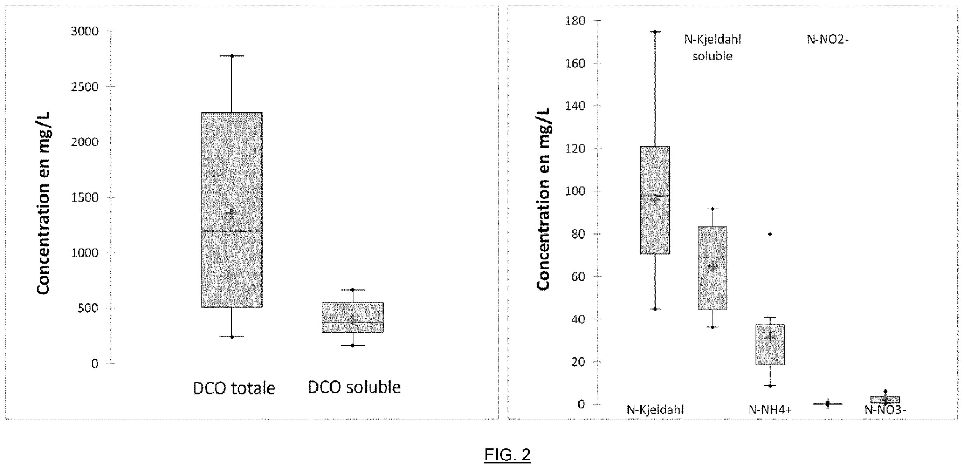

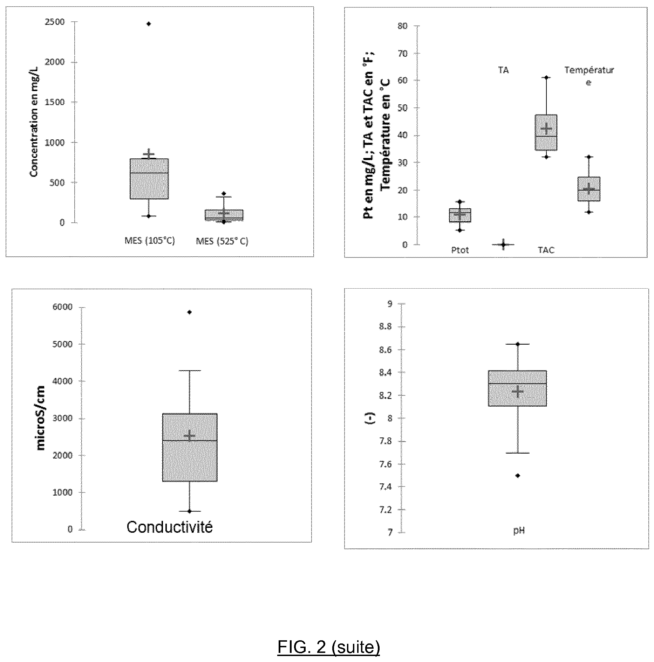

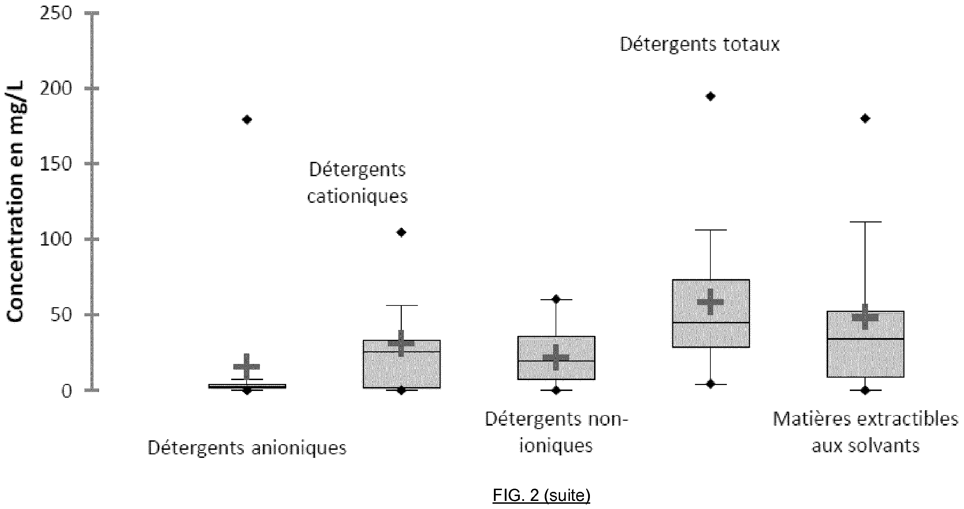

Les effluents hospitaliers ont été caractérisés. Par exemple, la Figure 2 donne, parmi d'autres paramètres (DCO, température, conductivité, pH, etc.) les concentrations des différents types de macropolluants (détergents) dans les eaux usées rejetées par l'hôpital. Chaque résultat correspond à une analyse de 10 et 17 échantillons. Les boîtes à moustache sont délimitées par les percentiles 25 et 75, les losanges correspondent aux valeurs extrêmes, la croix est la moyenne et la médiane est représentée par la ligne horizontale traversant la boîte à moustache.

Le pilote expérimental a été dimensionné pour traiter l'équivalent de rejet correspondant à un lit hospitalier, soit entre 300 et 500 litres par jour. Les paramètres opérationnels ont été optimalisés afin d'accroître les rendements d'élimination des micropolluants et répondre aux exigences de la qualité des eaux en termes d'élimination des macropolluants. A titre d'exemple, le Tableau 2 présente les objectifs de qualité à atteindre pour les stations d'épuration de capacités comprises entre 10 000 et 100 000 EH.

**Tableau 2: Norme de qualité des eaux de rejet (conforme à la directive 91/271/EEC)**

| **Paramètres** | **Unité(s)** | **Valeurs cibles** |
|---|---|---|
| DCO | mg O₂ l⁻¹ | ≤ 125 |
| Nt | mg N l⁻¹ | ≤ 15 |
| MES | mg l⁻¹ | ≤ 35 |

Durant la période des essais, les rendements d'élimination des micropolluants ont été évalués pour différentes conditions opérationnelles (pO2, SRT et HRT), lesquelles peuvent stimuler l'installation de niches métaboliques spécifiques. En agissant sur ces paramètres clés, une attention particulière a été portée sur l'installation de métabolismes nitrifiants et dénitrifiants. En effet, une biologie de ce type (dite nitrifiante ou à faible charge massique), est également plus efficace en termes de dégradation des micropolluants.

Les conditions de fonctionnement de l'unité MB-MBR et les performances d'élimination en macro- et micropolluants associées sont reprises ci-après. Les rendements sont exprimés en nombre décimal et sont calculés à partir de concentration avant traitement (C0) et après traitement (C). Un rendement de 1 équivaut à 100% d'élimination et de 0 à 0% d'élimination.

La première phase était consacrée à l'optimisation de la nitrification et la deuxième phase à l'amélioration du processus de dénitrification. Deux mécanismes de dénitrification ont été investigués : (1) la nitrification et dénitrification simultanée (SNDN) et (2) l'alternance de phases aérobies et anoxiques (ANDN). Le potentiel de nitrification et dénitrification actif simultané (SNDN) repose sur la présence d'un biofilm immobilisé sur les supports. Dans un réacteur unique, il s'agit de maintenir des conditions opératoires qui permettent aux bactéries hétérotrophes de dénitrifier dans des zones anoxies du biofilm, alors que la nitrification a lieu en périphérie de la biomasse dans les zones aérobies. L'avantage théorique de la stratégie SNDN est d'économiser le volume anoxique. Le mécanisme SNDN peut être expliqué par les limitations au transfert en oxygène au sein du biofilm (existence de zones aérobies et anoxies).

Les différents paramètres de fonctionnement de l'unité MB-MBR testés sont repris dans le Tableau 3.

**Tableau 3: Paramètres opérationnels de l'unité pilote**

| **MB** | | | | | |
|---|---|---|---|---|---|
| **Paramètres** | **Unité(s)** | **Min** | **Moyenne** | **Max** | **Écart-type** |
| **OPERATIONNELS** | | | | | |
| HRT (MB) | Heures | 8,8 | 15 | 28,2 | 2,5 |
| SRT | Jour ⁻¹ | 17 | 35 | 50 | 16 |
| Température | °C | 15 | 19 | 25 | 3,1 |
| PH | - | 7,2 | 8 | 8,7 | 0,4 |

| **BIOLOGIE** | | | | | |
|---|---|---|---|---|---|
| [MES]_{LM} | kg m⁻³ | 1,3 | 4,8 | 13,3 | 1,9 |
| MVS_{LM} | % | 55 | 74 | 85 | 8 |
| [MES]_{biofilm} | kg m⁻³ | 0,1 | 0,5 | 1 | 0,3 |
| Supports bactériens | % volume total | - | 30 | - | - |

| **CHARGES** | | | | | |
|---|---|---|---|---|---|
| Cv | kg DCO m⁻³ j⁻¹ | 0,2 | 0,7 | 2,0 | 0,3 |
| Cm | kg DCO kg MVS⁻¹ j⁻¹ | 0,07 | 0,2 | 0,3 | 0,07 |

| **SNDN** | | | | | |
|---|---|---|---|---|---|
| Concentration O₂ | mg O₂ l⁻¹ | 1 | 1,6 | 2,4 | 0,7 |

| **ANDN** | | | | | |
|---|---|---|---|---|---|
| Concentration O₂ | mg O₂ l⁻¹ | 0,4 | 0,6 | 1,0 | 0,2 |
| Temps anoxie | min | 6,0 | 9,6 | 12,0 | 2,6 |
| Temps aérobie | min | 4,0 | 5,6 | 9,0 | 2,3 |
| Temps anoxie | % | 31 | 46 | 57 | 11 |

| **MBR** | | | | | |
|---|---|---|---|---|---|
| **Paramètres** | **Unité(s)** | **Min** | **Moyenne** | **Max** | **Écart-type** |
| Q surfac. (MBR) | l m⁻² h⁻¹ | 4 | 9 | 13 | 4,2 |
| Temps production | min | - | 12 | - | - |
| Tps. backwashing | min | - | 1 | - | - |

### Rendement sur les macropolluants

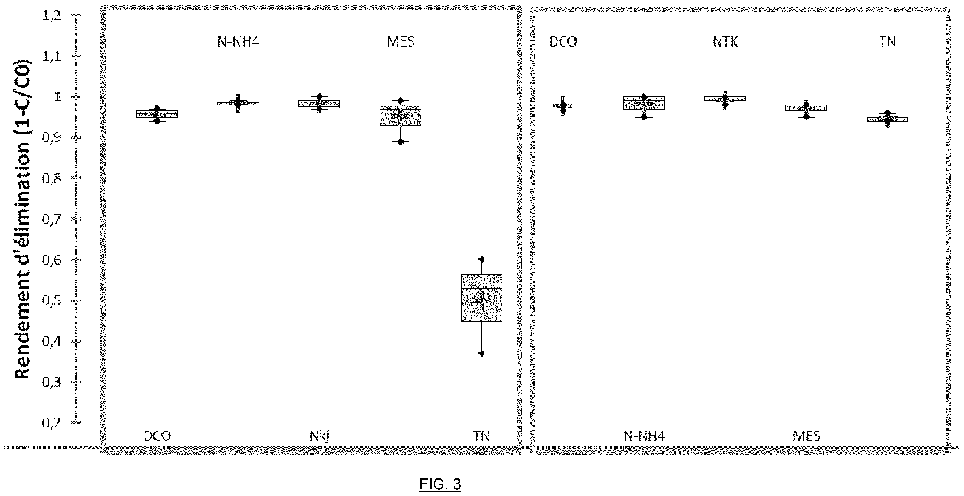

En moyenne, la qualité des effluents en sortie de MB-MBR est très bonne. Les concentrations en DCO et en matières en suspension (MES) sont respectivement en moyenne de 25 et 3 mg l⁻¹ (94 et 97 % de rendement d'élimination). Bien que l'étape de nitrification ne soit pas limitante (en moyenne N-NH₄ < 0,8 mg l⁻¹), les rendements d'élimination de l'azote total (TN sur la figure) restaient faibles (< 50 %) lorsque le pilote opérait en configuration SNDN. L'épaisseur du biofilm sur les supports bactériens n'était vraisemblablement pas suffisante pour permettre un gradient de concentration en oxygène induisant des conditions anoxiques. Le passage en alternance de phase a permis d'atteindre de bonnes performances avec une concentration en azote total en sortie du MB-MBR inférieure à 15 mg l⁻¹. La Figure 3 rassemble les rendements d'élimination des macropolluants pour les deux stratégies d'aération investiguées (dénitrification par SNDN à gauche, n=3 et ANDN, n=5 à droite). Les boîtes à moustache sont délimitées par les percentiles 25 et 75, les losanges correspondent au rendement minimum et maximum rencontré, la croix est la moyenne et la médiane est représentée par la ligne horizontale traversant la boîte à moustache.

### Rendement sur les micropolluants

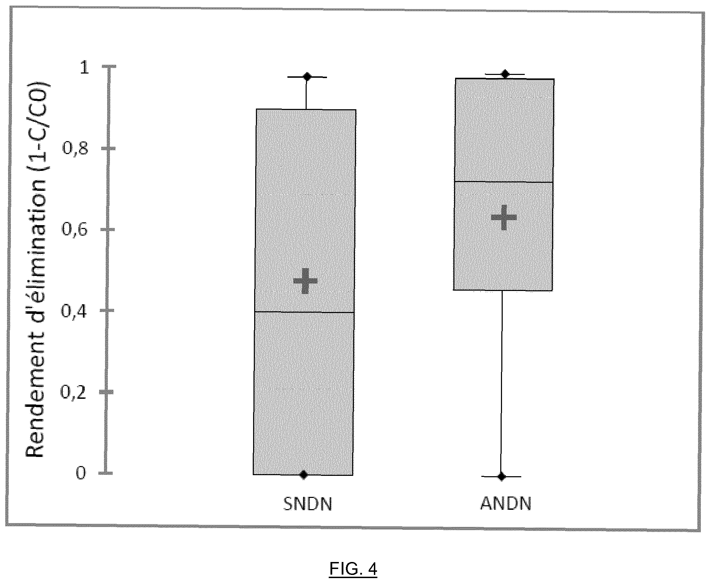

Les rendements correspondants pour l'ensemble des micropolluants sont repris à la Figure 4 (mêmes conventions statistiques que pour la Figure 3). Le rendement moyen d'élimination des micropolluants en conditions ANDN (bonne élimination de l'azote total) atteint 64 % contre 48% en SNDN. A noter que la stratégie ANDN montre des rendements beaucoup plus stables (écart inter-quantile, variance et écart-type plus faibles).

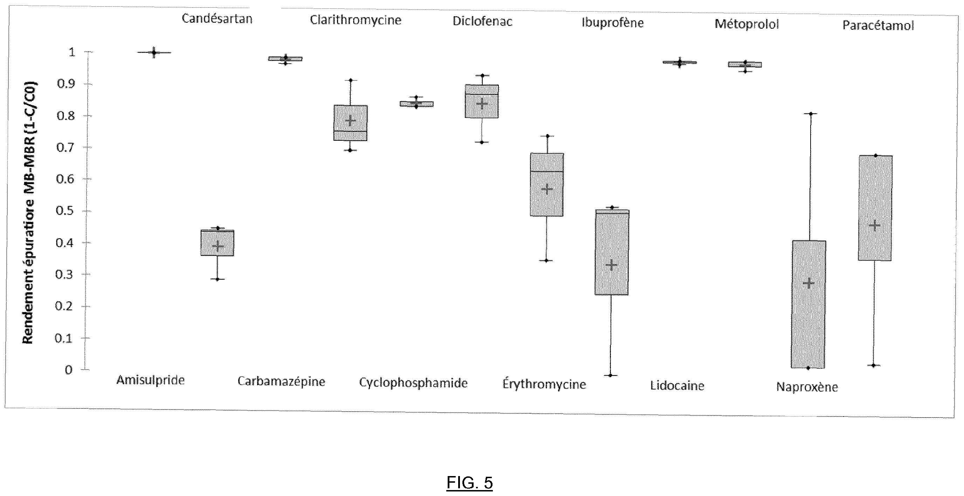

L'analyse des rendements épuratoires pour les molécules indicatrices est présentée à l'exception de trois molécules (carbamazépine, diclofénac, lidocaïne) qui n'ont pas pu être dosées à l'aide du protocole unique développé par le centre d'analyse. La Figure 5 montre le rendement épuratoire de la partie MB-MBR du procédé selon l'invention pour chacune des molécules indicatrices quantifiables. Les boîtes à moustache sont délimitées par les percentiles 25 et 75, les losanges correspondent au rendement minimum et maximum rencontré, la croix est la moyenne et la médiane est représentée par la ligne horizontale traversant la boîte à moustache.

### Paramètres de fonctionnement optimaux des CAB

Les performances d'épuration biologique des micropolluants ont été évaluées selon la méthodologie suivante :
1. Saturation des sites d'adsorption et vérification par mesure de l'abattement du carbone organique dissous ;
2. Evaluation de l'activité bactérienne via des mesures de consommation en oxygène ;
3. Analyses de corrélation entre l'activité bactérienne et l'élimination des micropolluants.

L'allure de la courbe d'élimination de la pollution carbonée (Dissolved Organic Carbon ou DOC) en fonction du volume traité, exprimé en nombre de volume de lit (*Bed volume (Nr), BV*), se divise en trois parties :
a. Une phase d'élimination de type I,
b. Une phase d'arrêt de l'élimination (« plateau »),
c. Une phase d'élimination de type II.

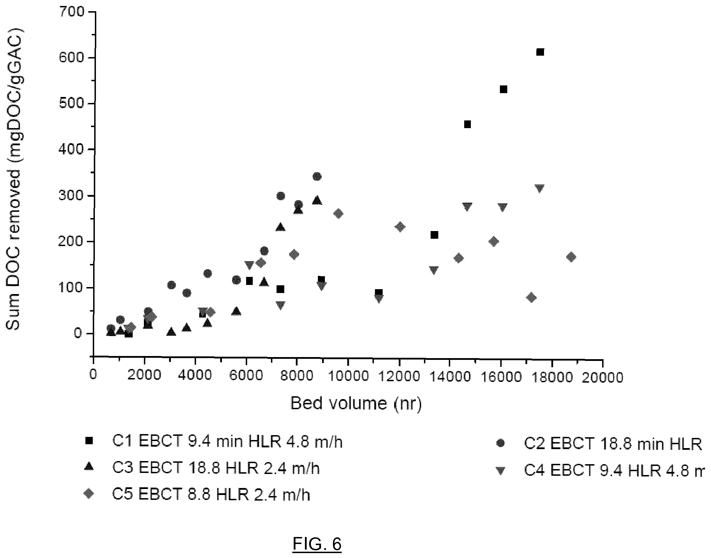

Le profil de la courbe d'élimination du DOC montre, sur la Figure 6, deux cinétiques d'élimination distinctes, le point de transition apparaissant à 6 000 BV (colonne C2 et C3) et à 13 000 BV (colonne C1, C4 et C5). La phase d'élimination de type II témoigne d'une activité bactérienne beaucoup plus importante que la phase de type I.

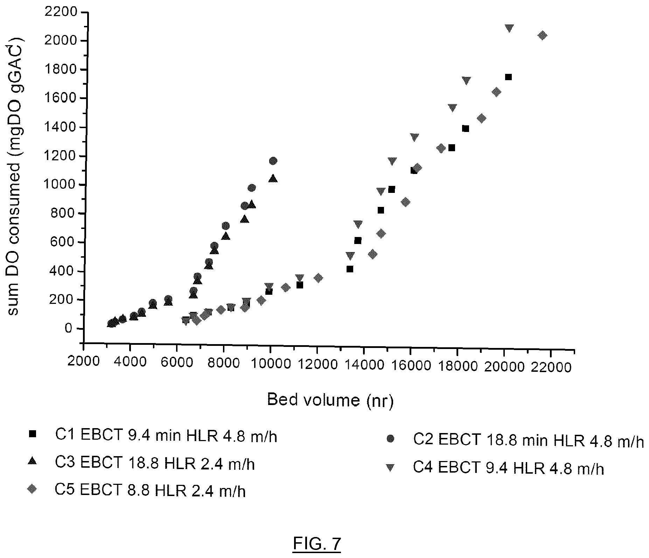

L'examen de la consommation cumulée en oxygène dissous (DO) montré sur la Figure 7 suggère le développement d'une activité microbienne (consommation d'oxygène) responsable de l'élimination du DOC observé après 6 000 BV et 13 000 BV pour les colonnes C2-C3 et les colonnes C1-C4-C5, respectivement.

Afin de mettre en lumière une activité biologique de dégradation des micropolluants, deux molécules ont été monitorées : la clarithromycine, molécule modérément biodégradable et la carbamazépine, molécule difficilement biodégradable (non représenté).

L'allure de la courbe de dégradation de la clarithromycine suit le même schéma que celle de la consommation en DOC (deux phases d'élimination séparées par une phase « plateau »). Cette observation suggère que le développement d'une activité bactérienne améliore l'élimination de ce micropolluant.

Le profil de la courbe d'abattement cumulé de la carbamazépine peut servir comme témoin (« blanc ») d'une colonne de charbon actif sans bioactivité. Deux régimes d'abattement sont clairement identifiables : jonction à 6000 BV (colonne C2 et C3) et à 13 000 BV (colonne C1, C4 et C5). Toutes précautions prises, il est raisonnable de conclure que l'activité microbienne contribue de façon significative à l'élimination des micropolluants comme le suggèrent les données présentées sur la Figure 7.

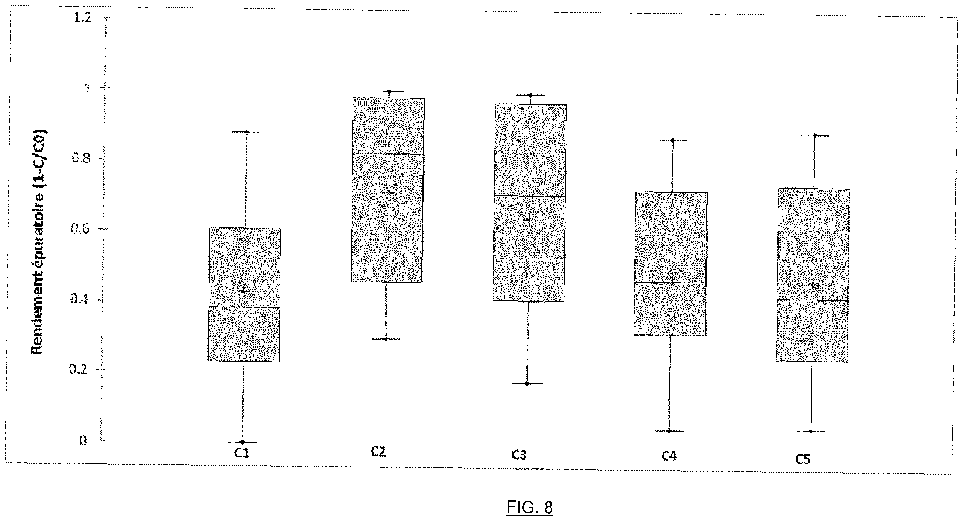

En fonction des paramètres opérationnels retenus pour les colonnes C1 à C5, les rendements épuratoires de 12 des 13 molécules indicatrices de l'efficacité du procédé sont présentés à la Figure 8. Les résultats montrent les meilleures performances pour les colonnes C2 et C3 avec un rendement moyen légèrement supérieur pour la colonne C2 (0,71 contre 0,64).

La colonne C2 atteint les meilleures performances globales pour un temps de contact hydraulique (Empty Bed Contact Time ou EBCT) de 18,8 min et un HLR de 4,8 mh⁻¹.

Certaines molécules facilement biodégradables comme le paracétamol, le naproxène ou l'ibuprofène montrent des rendements moyens inférieurs à 50%. Ces rendements faibles sont expliqués par une concentration en entrée proche de la LOQ.

### Contrainte de fonctionnement en vue du couplage MB-MBR-CAB

On notera la nécessité d'installer une cuve tampon entre les deux étages biologiques (MB-MBR et CAB). Ce tampon hydraulique est nécessaire pour le contre-lavage des membranes du MBR et celui du charbon des colonnes de CAB. Cet ouvrage sera dimensionné sur base d'un temps de séjour hydraulique de 1 à 3 heures en fonction de la configuration et du nombre de colonnes CAB retenues.

### Procédé à deux étages - Rendements épuratoires

Les rendements épuratoires du procédé selon l'invention ont été évalués en termes d'élimination des macro- et des micropolluants sur 6 échantillons moyens 24h.

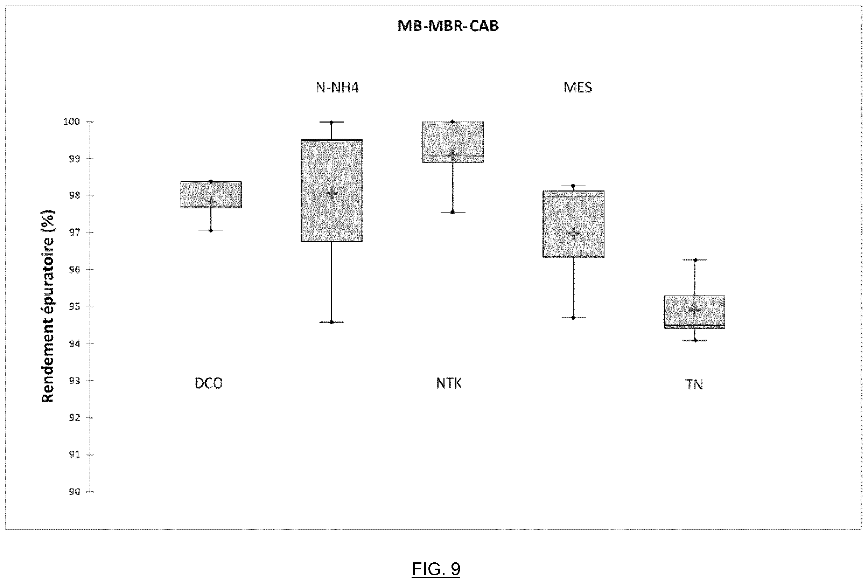

La grande majorité de l'élimination des macropolluants a lieu dans le MB-MBR (rendement CAB < 1% du rendement global pour la DCO et l'azote). Les résultats sont repris à la Figure 9.

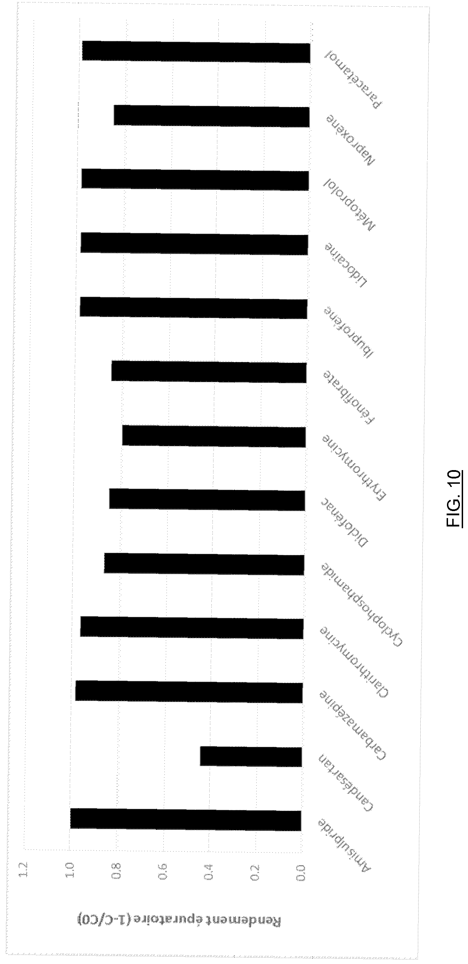

Sur les treize molécules indicatrices, douze montrent un rendement épuratoire global supérieur ou égal à 80% (Figure 10). Parmi celles-ci, la clarithromycine, l'érythromycine et le diclofénac sont repris dans la liste de vigilance européenne (UE 2015/495).

Le candésartan, un antihypertenseur, est caractérisé par un rendement d'élimination légèrement supérieur à 40%. Peu de références sont retrouvées dans la littérature sur son élimination par voie biologique. Gurke *et al.* (2015) ont analysé les charges en candésartan en entrée et sortie de station d'épuration biologique. Sur les dix échantillons analysés, le rendement moyen d'élimination est égal à 0% avec un écart type de +/-10 %. Cela montre la difficulté d'élimination de ce composé par des traitements biologiques. Pour le reste des molécules, l'efficacité du procédé selon l'invention est bien confirmée.

En conclusion, les rendements épuratoires ont été calculés pour un pilote en conditions stationnaires dont les paramètres de fonctionnement ont été optimisés lors de la phase expérimentale. Sur les treize micropolluants retenus comme molécules indicatrices du bon fonctionnement du process, douze montrent un rendement d'élimination global supérieur ou égal à 80%. Parmi ceux-ci, la clarithromycine, l'érythromycine et le diclofénac sont présents sur la liste de vigilance européenne. Le candésartan, un antihypertenseur très difficilement biodégradable, est caractérisé par un rendement d'élimination moyen de 44%.

La synthèse des résultats montre que le procédé développé dans le cadre de l'invention est particulièrement efficace pour des molécules difficilement biodégradables (le candésartan, le cyclophosphamide, le diclofénac et le métoprolol). Le rendement moyen des treize molécules s'élève à 89% avec un écart type de 15%.

### Symboles de référence

- 1: Eau usée
- 2: Eau traitée (rejet)
- 3: Air
- 4: Boue
- 10: Tampon de prétraitement
- 11: MB-MBR
- 12: Biofiltration
- 13: Traitement de l'air

**Liste des abréviations**

| **Abréviation** | **Signification** | **Unité** |
|---|---|---|
| AOP | Advanced oxydation process | |
| BAC | Boues activées conventionnelles - en anglais : Conventional activated sludge CAS) | |
| BV | Bed volume ou volume de lit | (-) |
| CA | Charbon actif | |
| CAB | Charbon activé biologiquement - en anglais : Granulated activated carbon (GAC) | (-) |
| CAG | Charbon actif en grains | |
| CAP | Charbon actif en poudre | |
| DCO | Demande chimique en oxygène - en anglais : Chemical oxygen demand (COD) | mg O₂ l⁻¹ |
| DO | Dissolved oxygen | mg O₂ |
| DOC | Dissolved Organic Carbon | mg Cl⁻¹ |
| EBCT | Empty bed contact time | min |
| EH | Equivalent habitant | (-) |
| HLR | Hydraulic loading rate | m h⁻¹ |
| HRT | Hydraulic rétention time | h |
| LOQ | Limit of quantification | |
| MB-MBR | Moving bed - Membrane bioreactor | (-) |
| MES | Matière en suspension | mg l⁻¹ |
| MVS | Matière volatile en suspension | mg l⁻¹ |
| Nr | Nombre | (-) |
| Nt (ou TN) | Azote total | |
| NTK | Azote (Kjeldahl) total | mg N l⁻¹ |
| SRT | Solids rétention time | |

### Références bibliographiques

Andersson, S. 2009. Characterization of Bacterial Biofilms for Wastewater Treatment. School of Biotechnology, Royal Institute of Technology (KTH)*,* Sweden.
Aubenneau, M., Tahar, A., Casellas, C., & Wisniewski, C. 2010. Membrane bioreactor for pharmaceutically active compounds removal: Effects of carbamazepine on mixed microbial communities implied in the treatment. Bioprocess Engineering - SFGP2009 45, 1826-1831.
Chang, S., Waite, T.D., Schäfer, A.I., & Fane, A.G. 2003. Adsorption of the endocrine-active compound estrone on microfiltration hollow fiber membranes. Environmental science & technology 37, 3158-3163.
Chu, L., & Wang, J. 2011. Comparison of polyurethane foam and biodegradable polymer as carriers in moving bed biofilm reactor for treating wastewater with a low C/N ratio. Chemosphere 83, 63-68.
Cicek, N., Macomber, J., Davel, J., Suidan, M., Audic, J., & Genestet, P. 2001. Effect of solids rétention time on the performance and biological characteristics of a membrane bioreactor. Water Science & Technology 43, 43-50.
Clara, M., Strenn, B., Gans, O., Martinez, E., Kreuzinger, N., & Kroiss, H. 2005. Removal of selected pharmaceuticals, fragrances and endocrine disrupting compounds in a membrane bioreactor and conventional wastewater treatment plants. Water Research 39, 4797-4807.
Falås, P., Baillon-Dhumez, A., Andersen, H.R., Ledin, A., & la Cour Jansen, J. 2012. Suspended biofilm carrier and activated sludge removal of acidic pharmaceuticals. Water Research 46, 1167-1175.
Falås, P., Longrée, P., la Cour Jansen, J., Siegrist, H., Hollender, J., & Joss, A. 2013. Micropollutant removal by attached and suspended growth in a hybrid biofilm-activated sludge process. Water Research 47, 4498-4506.
Joss, A., Zabczynski, S., Göbel, A., Hoffmann, B., Löffler, D., McArdell, C.S., Ternes, T.A., Thomsen, A., & Siegrist, H. 2006. Biological dégradation of pharmaceuticals in municipal wastewater treatment: proposing a classification scheme. Water Research 40, 1686-1696.
Luo, Y., Guo, W., Ngo, H.H., Nghiem, L.D., Hai, F.I., Kang, J., Xia, S., Zhang, Z., & Price, W.E. 2014. Removal and fate of micropollutants in a sponge-based moving bed bioreactor. Bioresource Technology159, 311-319.
Ngo, H.-H., Guo, W., & Xing, W. 2008. Evaluation of a novel sponge-submerged membrane bioreactor (SSMBR) for sustainable water reclamation. Bioresource Technology 99, 2429-2435.
Nguyen, L.N., Hai, F.I., Kang, J., Price, W.E., & Nghiem, L.D. 2012. Removal of trace organic contaminants by a membrane bioreactor-granular activated carbon (MBR-GAC) system. Special issue on the Challenges in Environmental Science and Engineering 113, 169-173.
Nguyen, L.N., Hai, F.I., Kang, J., Price, W.E., & Nghiem, L.D. 2013. Coupling granular activated carbon adsorption with membrane bioreactor treatment for trace organic contaminant removal: Breakthrough behaviour of persistent and hydrophilic compounds. Journal of EnvironmentalManagement 119, 173-181. Radjenovic, J., Petrovic, M., & Barceló, D. 2007. Analysis of pharmaceuticals in wastewater and removal using a membrane bioreactor. Analytical and Bioanalytical Chemistry 387, 1365-1377.
Rodríguez-Hernández, L., Esteban-García, A.L., & Tejero, I. 2014. Comparison between a fixed bed hybrid membrane bioreactor and a conventional membrane bioreactor for municipal wastewater treatment: A pilot-scale study. Bioresource Technology 152, 212-219.
Roh, H., Subramanya, N., Zhao, F., Yu, C.-P., Sandt, J., & Chu, K.-H. 2009. Biodégradation potential of wastewater micropollutants by ammonia-oxidizing bacteria. Chemosphere 77, 1084-1089.
Weiss, S., & Reemtsma, T. 2008. Membrane bioreactors for municipal wastewater treatment-A viable option to reduce the amount of polar pollutants discharged into surface waters? Water research 42, 3837-3847.
De Wever, H., Weiss, S., Reemtsma, T., Vereecken, J., Müller, J., Knepper, T., Rörden, O., Gonzalez, S., Barcelo, D., & Dolores Hernando, M. 2007. Comparison of sulfonated and other micropollutants removal in membrane bioreactor and conventional wastewater treatment. Water research 41, 935-945.
Zupanc, M., Kosjek, T., Petkovsek, M., Dular, M., Kompare, B., Sirok, B., Blažeka, Ž., & Heath, E. 2013. Removal of pharmaceuticals from wastewater by biological processes, hydrodynamic cavitation and UV treatment. Ultrasonics Sonochemistry 20, 1104-1112.

## Revendications

1. Un procédé complètement biologique pour éliminer des micropolluants d'origine pharmaceutique dans des eaux usées, le procédé comprenant les étapes de :
- fournir un bioréacteur (11) à membranes et à lit mobile (MB-MBR) pour développer une croissance de biomasse à la fois sur support fixe et en suspension sous forme de flocs, et sur des supports mobiles ;
- fournir une cuve de biofiltration (12), distincte de la cuve du bioréacteur, comprenant une ou plusieurs colonnes à charbon activé biologiquement (CAB) ;
- alimenter une cuve tampon (10) en amont du bioréacteur avec des eaux usées (1) comprenant des micropolluants d'origine pharmaceutique ;
- prétraiter lesdites eaux usées comprenant des micropolluants d'origine pharmaceutique par passage dans un tamis à mailles fines, de manière à retenir les particules ayant un diamètre supérieur à 1 mm ;
- dans un premier traitement, introduire les eaux usées (1), une fois tamisées, dans le bioréacteur (11) peuplé d'un premier consortium microbien se trouvant et/ou se développant sur les parties fixes et en suspension sous forme de flocs, et sur les supports mobiles, pendant un premier temps de rétention ;
- dans un second traitement, introduire les eaux usées (1) traitées par le bioréacteur (11) dans la cuve de biofiltration (12) et adsorber les résidus de micropolluants d'origine pharmaceutique sur le charbon activé biologiquement ;
- laisser coloniser le charbon activé biologiquement ayant adsorbé les résidus de micropolluants d'origine pharmaceutique par un second consortium microbien sous forme de biofilms pendant un second temps de rétention,
- rejeter dans l'environnement les eaux usées traitées (2),
le temps de rétention hydraulique total, constitué de la somme du premier temps de rétention et du second temps de rétention, étant déterminé pour abaisser dans les eaux usées traitées (2) la concentration d'un ou plusieurs micropolluants d'origine pharmaceutique sous sa limite de détection et/ou pour obtenir un rendement global d'élimination des micropolluants d'origine pharmaceutique supérieur à 80%, de préférence supérieur à 95%, de leur teneur dans les eaux usées de départ (1).

2. Le procédé selon la revendication 1, **caractérisé en ce que** la cuve du bioréacteur (11) à membranes et à lit mobile (MB-MBR) est séparé de la cuve de biofiltration (12) par une membrane d'ultrafiltration.

3. Le procédé selon la revendication 1, **caractérisé en ce que** les micropolluants d'origine pharmaceutique considérés dans le procédé sont au moins sélectionnés dans le groupe constitué de l'amisulpride, le candésartan, la carbamazépine, la clarithromycine, le cyclophosphamide, le diclofénac, l'érythromicine, le fénofibrate, l'ibuprofène, la lidocaïne, le métoprolol, le naproxène et le paracétamol.

4. Le procédé selon la revendication 1, **caractérisé en ce qu'**on introduit dans le bioréacteur à membranes un premier consortium de microorganismes externes, pour coloniser des parties fixes et les supports mobiles avec lesdits microorganismes et mettre en culture un biofilm sur ces parties fixes et supports mobiles afin d'immobiliser lesdits microorganismes.

5. Le procédé selon la revendication 3, **caractérisé en ce qu'**on introduit dans la cuve de biofiltration un second consortium de microorganismes externes, pour coloniser le charbon activé biologiquement ayant capté les résidus de micropolluants d'origine pharmaceutique adsorbés par le charbon activé biologiquement.

6. Le procédé selon la revendication 1, **caractérisé en ce que** les microorganismes du second consortium sont en tout ou en partie différents de ceux du premier consortium.

7. Le procédé selon la revendication 1, **caractérisé en ce que** le charbon activé biologiquement est mis en oeuvre sous forme de charbon actif en poudre, en grains ou en micrograins.

8. Le procédé selon la revendication 1, **caractérisé en ce qu'**une étape supplémentaire de purification de l'air issu de la filière de traitement des eaux usées est mise en oeuvre, notamment en vue d'éliminer les odeurs, au moyen d'ozone, de rayonnement ultraviolet ou de charbon actif.

9. Installation pour la mise en oeuvre du procédé selon l'une quelconque des revendications précédentes, **caractérisé en ce qu'**elle comprend :
- une cuve tampon (10) pour une alimentation stable en eaux usées contenant des micropolluants d'origine pharmaceutique ;
- une unité de pompage ;
- une étape de prétraitement incluant au moins un tamis à mailles fines pour la rétention des particules ayant un diamètre supérieur à 1 mm ;
- un bioréacteur (11) à membranes et à lit mobile (MB-MBR) pour développer une croissance de biomasse à la fois sur support fixe et en suspension sous forme de flocs, et sur des supports mobiles ;
- au moins une cuve de biofiltration sur charbon activé biologiquement (12) distincte de la cuve du bioréacteur (11), séparée de celui-ci par une membrane d'ultrafiltration et située en aval de celui-ci, comprenant une ou plusieurs colonnes à charbon activé biologiquement (CAB) ;
- des unités de stockage et dosage de produits chimiques ;
- un système de traitement de l'air et des odeurs (13).

10. Installation selon la revendication 9, **caractérisé en ce qu'**une cuve tampon est insérée entre le bioréacteur à membrane et la cuve de biofiltration, pour le contre-lavage des membranes du bioréacteur et du charbon activé biologiquement.
